# EUROPEAN PATENT SPECIFICATION

(11) **EP 3 233 350 B1**
(45) Date of publication and mention of the grant of the patent: **20.04.2022**
(21) Application number: 15787407.4
(22) Date of filing: 18.10.2015
(51) Int. Cl.: B23K 9/10

(54) **SYSTEMS FOR PROVIDING A WELDING SYSTEM ACCESS TO A NETWORK VIA POWER LINES**
SYSTEME ZUR BEREITSTELLUNG EINES SCHWEISSSYSTEMZUGANGS ZU EINEM NETZWERK ÜBER STROMLEITUNGEN
SYSTÈME DE SOUDAGE RELIÉ À UN RÉSEAU PAR LE CABLE D'ALIMENTATION

(30) Priority: 18.12.2014 US 201414575825
(43) Date of publication of application: 25.10.2017
(73) Proprietor: Illinois Tool Works Inc., Glenview, IL 60025 (US)
(72) Inventor: DENIS, Marc Lee, Glenview, Illinois 60025 (US)
(74) Representative: Trinks, Ole
(86) International application number: PCT/US2015/056125
(87) International publication number: WO 2016/099640

(56) References cited:
- US-A1- 2011 073 569
- US-A1- 2014 051 358
- US-B1- 7 049 547

## Description

### BACKGROUND

The present disclosure relates generally to welding systems as defined in the preamble of claim 1. Such a welding system is disclosed in US 7 049 547 B1.

Welding is a process that has become increasingly prevalent in various industries and applications. Such processes may be automated in certain contexts, although a large number of applications continue to exist for manual welding applications. In both cases, such welding applications rely on a variety of types of equipment to ensure that the supply of welding consumables (e.g., wire, shielding gas) is provided to the weld in an appropriate amount at the desired time. For example, a metal inert gas (MIG) welding system typically relies on a wire feeder to enable a welding wire to reach a welding torch. The wire is continuously fed during welding to provide filler metal. The MIG welding system may also include a welding power source that ensures that arc heating is available to melt the filler metal and the underlying base metal. In certain applications, the welding system may include power cables that supply power from the welding power source to a welding torch performing a welding application. For example, the welding power source may provide a welding voltage that may be utilized between the welding torch and a workpiece to perform the welding application.

To further enhance the operability of traditional welding systems, data regarding the welding systems may be analyzed and shared with, for example, other welding systems as well as various data analysis services. However, due to the environments in which welding systems may be employed, it may be difficult to communicate data regarding the welding system to other entities.

### BRIEF DESCRIPTION

Certain embodiments in accordance with present disclosure are summarized below. These embodiments are not intended to limit the scope of the present disclosure, but rather these embodiments are intended only to provide a brief summary of possible forms of the present disclosure. Indeed, the present disclosure may encompass a variety of forms covered by the claims that may be similar to or different from the embodiments set forth below.

According to the present invention, a welding system is provided as defined in claim 1. It includes a plurality of power cables that provide an alternating current (AC) power from a source of power to a plurality of welding power supply units. The welding system also includes a first welding power supply unit of the plurality of welding power supply units configured to receive the AC power via one of the power cables. The first welding power supply unit includes a first communication component configured to couple to the one of the power cables, and wherein the first communication component is configured to receive data from welding system components and to convert them to a first set of data that may be transmitted via the one of the power cables. The welding system also includes a second welding power supply unit configured to receive the AC power via another of the power cables, wherein the second welding power supply unit comprises a second communication component configured to couple to the one of the power cables, and wherein the second communication component is configured to receive data from welding system components and to convert them to a second set of data that may be transmitted via the one of the power cables. The second communication component is configured to receive the first set of data via the one of the power cables, the first communication component is configured to receive the second set of data via the one of the power cables to enable communication between the communication components of the first and second welding power supply unit wherein at least one of the welding power supply units is communicatively coupled to a cloud-based computing system via the communication component. The communication component of said at least one welding power supply unit receives and aggregates said converted first and second sets of data via the power cables and transmits them to the cloud-based computing system via a different network connection than the one or more power lines.

Further features of the present invention are disclosed in the subclaims.

### DRAWINGS

These and other features, aspects, and advantages of the present disclosure will become better understood when the following detailed description is read with reference to the accompanying drawings in which like characters represent like parts throughout the drawings.

The drawings show in detail:
FIG. 1 illustrates an example welding system having a communication system as part of a welding power source, in accordance with embodiments described herein;
FIG. 2 illustrates a block diagram of components that may be part of the communication system of FIG. 1, in accordance with embodiments described herein;
FIG. 3 illustrates a block diagram of a network that facilitates communication between welding systems and a cloud-based computing system, in accordance with embodiments described herein;
FIG. 4 illustrates a block diagram of functional components that may be part of the cloud-based computing system of FIG. 2, in accordance with embodiments described herein;
FIG. 5 illustrates a flow chart of a method for transmitting data from a welding system via a power line, in accordance with embodiments described herein; and
FIG. 6 illustrates a flow chart of a method for transmitting data received via a power line to a network, in accordance with embodiments described herein.

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and businessrelated constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Embodiments of the present disclosure are generally directed towards enabling components in a welding system to communicate with a network. More specifically, embodiments of the present disclosure are related to providing a digital communication network for components within a welding system to communicate with each other via power lines. Generally, multiple welding power supplies receive alternating current (AC) power via an AC power source and AC power lines. Each welding power supply includes a communication system that receives data from various components within a respective welding system. Upon receiving the data, the communication system transmits the data to another communication system that is part of another welding power supply via power lines. That is, when two welding power supplies receive AC power from the same AC power source, the power lines between the two welding power supplies and the AC power source may facilitate data transfers between the two welding power supplies. After receiving data via the AC power lines, one of the communication systems described above that is communicatively coupled to a network transmits the received data to a cloud-computing system or the like. In this manner, data acquired from multiple welding systems may communicate with each other via a local network established using the AC power lines. In addition, each of the intercommunicating welding systems may also transmit data and receive data to and from a cloud-based computing system or some other network using the existing network connection of a welding system.

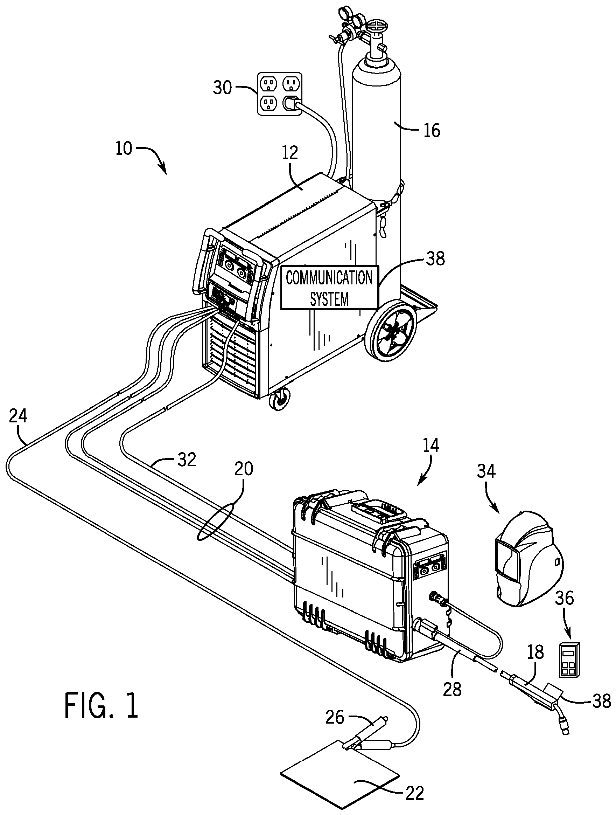

By way of introduction, FIG. 1 illustrates an example weld system 10 that uses a communication system to communicate via power lines. It should be appreciated that, while the welding system 10 described herein is specifically presented as a gas metal arc welding (GMAW) system 10, the presently disclosed system may also be used with other arc welding processes (e.g., FCAW, FCAW-G, GTAW, SAW, SMAW, or similar arc welding processes) or other metal fabrication systems, such as plasma cutting systems, induction heating systems, and so forth. The welding system 10 includes a welding power supply unit 12 (i.e., a welding power source), a welding wire feeder 14, a gas supply system 16, and a welding torch 18. The welding power supply unit 12 generally supplies power for the welding system 10 and other various accessories, and may be coupled to the welding wire feeder 14 via a weld cable 20 as well as coupled to a workpiece 22 using a return path via a work cable 24 having a clamp 26. In the illustrated embodiment, the welding wire feeder 14 is coupled to the welding torch 18 via a weld cable 28 in order to supply welding wire and power to the welding torch 18 during operation of the welding system 10. In another embodiment, the welding power supply unit 12 may couple with and directly supply power to the welding torch 18.

Before proceeding, it should be noted that the welding equipment and accessories illustrated in FIG. 1 are merely exemplary. That is, it should be understood that the components presented in the welding system 10 of FIG. 1 are not intended to be limiting of the types of welding equipment and accessories that may be used in the welding system 10.

Referring again to FIG. 1, the welding power supply unit 12 may generally include power conversion circuitry that receives input power from an alternating current power source 30 (e.g., an engine/generator set, or a combination thereof), conditions the input power, and provides DC or AC output power via the weld cable 20. The AC power source 30 may be single or multi-phase power source and may or may not have transformers between the connected supplies. In any case, the welding power supply unit 12 may receive power from the AC power source 30 to provide power to the welding wire feeder 14 that, in turn, powers the welding torch 18, in accordance with demands of the welding system 10. The work cable 24 terminating in the clamp 26 couples the welding power supply unit 12 to the workpiece 22 to close the circuit between the welding power supply unit 12, the workpiece 22, and the welding torch 18. The welding power supply unit 12 may include circuit elements (e.g., transformers, rectifiers, switches) capable of converting the AC input power to a direct current electrode positive (DCEP) output, direct current electrode negative (DCEN) output, DC variable polarity, or a variable balance (e.g., balanced or unbalanced) AC output, as dictated by the demands of the welding system 10 (e.g., based on the type of welding process performed by the welding system 10, and so forth).

The illustrated welding system 10 includes a gas supply system 16 that supplies a shielding gas or shielding gas mixtures to the welding torch 18. In the depicted embodiment, the gas supply system 16 is directly coupled to the welding torch 18 via a gas conduit 32 from the welding power supply unit 12. In another embodiment, the gas supply system 16 may instead be coupled to the welding wire feeder 14, and the welding wire feeder 14 may regulate the flow of gas from the gas supply system 16 to the welding torch 18. A shielding gas, as used herein, may refer to any gas or mixture of gases that may be provided to the arc and/or weld pool in order to provide a particular local atmosphere (e.g., shield the arc, improve arc stability, limit the formation of metal oxides, improve wetting of the metal surfaces, alter the chemistry of the weld deposit, and so forth).

In addition, in certain embodiments, other welding equipment and welding accessories (e.g., welding-related devices) may be used in the welding system 10. For example, in most welding applications, a welding helmet 34 may be worn by an operator of the welding system 10. The welding helmet 34 provides protection to the operator of the welding system 10, particularly protecting the eyes of the operator from the flashing associated with the welding arc during welding operations. In addition, in certain embodiments, the welding helmet 34 may provide feedback to the operator related to parameters of the welding operations. For example, the welding helmet 34 may include an internal display configured to display the welding parameters to the operator during the welding operations. In addition, in certain embodiments, a welding accessory 36 (also referred to as a welding subsystem) may be used to communicate between the welding wire feeder 14 and the welding torch 18. For example, the welding accessory 36 may be a pendant, a sensor, a battery, or the like. In certain embodiments, the welding accessory 36 may communicate with the welding system 10. Additionally, the welding accessory 36 is a device that may be used at a welding application remote from an associated welding power supply unit 12 and/or welding wire feeder 14, yet still communicates with the remote welding power supply unit 12 and/or welding wire feeder 14. In other words, the welding accessory 36 may receive data and relay the data back to the welding power supply unit 12 and/or the welding wire feeder 14 (e.g., via a wireless network connection).

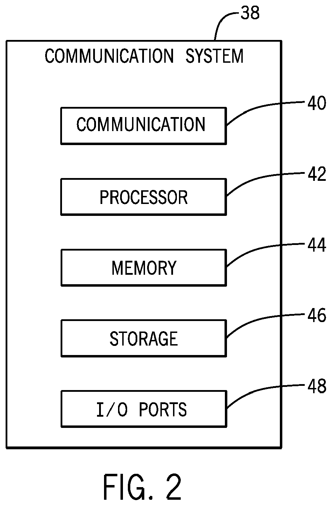

According to the invention, the power supply unit 12 includes a communication system 38. The communication system 38 may be a programmable logic controller (PLC) or a computing device that receives data from various welding components (e.g., wire feeder 14) via any wired or wireless medium and transmits the received data over power lines coupled to the AC power source 30. For instance, the communication system 38 may receive data from various components via wireless devices such as IEEE 802.15.1 Bluetooth^{®}, IEEE 802.15.4 with or without a ZigBee^{®} stack, IEEE 802.11x Wi-Fi, wired communications service such as IEEE 802.3 Ethernet, RS-232, RS-485, or any of the telecommunication MODEM standards such as V.32 etc.. After receiving this data, the communication system 38 may modify the received data such that it may be transmitted over the power lines coupled to the AC power source 30. Additional details regarding this transmission of data will be provided below with reference to FIGS. 2-5.

The communication system 38 includes certain components to enable it to send and receive data via power lines. For example, as shown in FIG. 2, the communication system 38 may include a communication component 40, a processor 42, a memory 44, a storage 46, input/output (I/O) ports 48, and the like. The communication component 40 may be a wireless or wired communication component that may facilitate communication between various components and other welding systems via the power lines. That is, the communication component 40 may receive data from various welding components via a wired or wireless network and may transmit the received data via the power lines.

The processor 42 or multiple processors of the communication system 38 may be capable of executing computer-executable code. The memory 44 and the storage 46 may be any suitable articles of manufacture that can serve as media to store processor-executable code, data, or the like. These articles of manufacture may represent computer-readable media (i.e., any suitable form of memory or storage) that may store the processor-executable code used by the processor. The memory 44 and the storage 46 may also be used to store data, analysis of data, and the like. The memory 44 and the storage 46 may represent non-transitory computer-readable media (i.e., any suitable form of memory or storage) that may store the processor-executable code used by the processor 42. It should be noted that non-transitory merely indicates that the media is tangible and not merely a signal. The I/O ports 48 may be interfaces that may couple to different types of I/O modules.

In certain embodiments, the communication system 38 may be part of a stand-alone device or a device that is separate from the welding power supply unit 12. In this way, the stand-alone device may receive power from the AC power source 30 and may receive data from the welding power supply unit 12 or any other welding component. After receiving the data, the stand-alone device may trasmit the data via the AC power line in which it receives power from the AC power source 30 using the techniques described herein. Additionally, the stand-alone device may send the data to a remote computer via wired networks (e.g., Ethernet, telephone modem, etc.) or wirelessly using any radio device connected through a network to reach the desired computer.

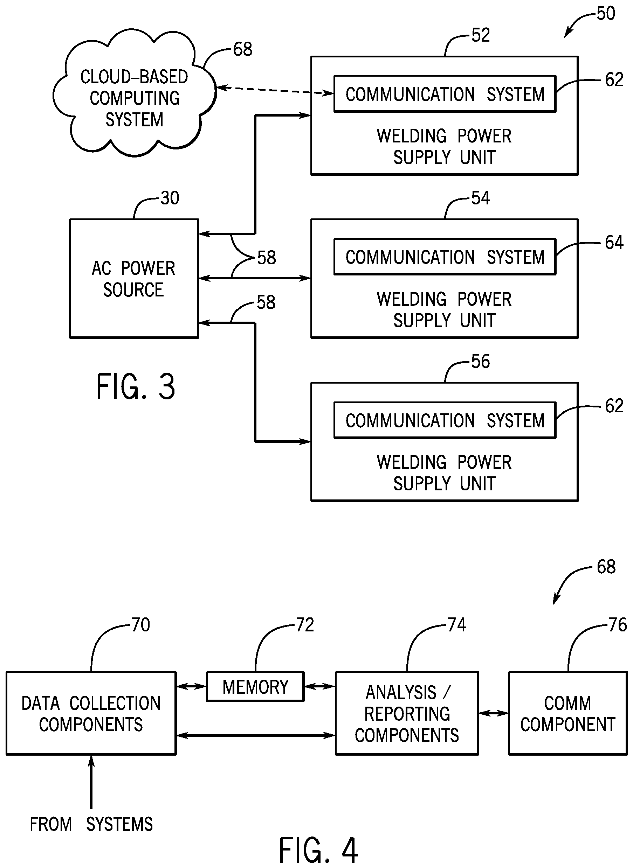

Keeping the foregoing in mind, FIG. 3 illustrates a network 50 that may be formed between multiples welding systems, such as the welding system 10 of FIG. 1. The network 50 may facilitate communication of data between, for example, three welding power supply units: a first welding power supply unit 52, a second welding power supply unit 54, and a third welding power supply unit 56. It should be noted, however, that the network 50 may include any number of welding power supply units.

In certain embodiments, each welding power supply unit 52, 54, 56 may receive AC power from the AC power source 30 via AC power lines 58. In addition to receiving power from the AC power lines 58, each welding power supply unit 52, 54, 56 may communicate with each other using the AC power lines 58. To facilitate this communication, each welding power supply unit 52, 54, and 56 may include a communication system, as described above. For instance, as shown in FIG. 3, the welding power supply units 52, 54, 56 may employ communication systems 62, 64, 66 to transmit data via the AC power lines 58. In this manner, the welding power supply units 52, 54, 56 may communicate or transmit data between each other.

In addition to communicating with other welding systems, at least one of the welding power supply units 52, 54, 56 (e.g., the first welding system 52 in the illustrated embodiment) is communicatively coupled to a cloud-based computing system 68 via the communication system 62. The cloud-based computing system 68 may be a network of computing devices that may provide data storage and analysis services.

FIG. 4 illustrates functional components that may be used to provide the storage and analysis services by the cloud-based computing system 68. As shown in FIG. 4, the cloud-based computing system 68 may include, for example, data collection components 70 that receive data regarding the welding power supply units 52, 54, 56 and other entities via the communication system 62. The data collection components 70 may "pull" the data by prompting data exchange with the communication system 62, or may work on a "push" basis where data is provided to the data collection components 70 by the communication system 62 without prompting. The data collection may occur at any desired frequency, or at points in time that are not cyclic. For example, data may be collected on a periodic basis as welding operations are performed, or data may be provided on a shift basis, a daily basis, a weekly basis, or as desired by a welding operator or facilities management team.

The cloud-based computing system 68 may also include memory 72 that store raw and processed data collected from the systems. Analysis/reporting components 74 may provide processing services for the raw data, and associating the resulting analysis with systems, entities, groups, welding operators, and so forth. Additionally, communications components 76 may allow for populating reports and interface pages with the results of the analysis. In certain embodiments, the communications components 76 may include various servers, modems, Internet interfaces, webpage definitions, and the like.

By transmitting the data associated with the welding power supply units 52, 54, 56 to the cloud-computing system 68, a wide range of data regarding the welding power supply units 52, 54, 56 and support equipment may be available for storage, analysis, tracking, monitoring, comparison and so forth. Moreover, the cloud-based computing system 68 may be available to remote users, via the Internet or some other network connection, to enable the users to view the data or analysis as webpages that can be provided to and view on a general-purpose browser. In practice, however, any suitable interface may be used. The use of general practice browsers and similar interfaces, however, allows for the data to be served to any range of device platforms and different types of devices, including stationary workstations, enterprise systems, but also mobile and handheld devices.

With the foregoing in mind and referring back to FIG. 3, the communication systems 62, 64, 66 communicate via the AC power lines 58 using IEEE 1139 Broadband Over Power Line technology (BPL), IEEE 1901.2 G3 Power Line Communications (PLC), or the like. That is, the communication systems 62, 64, 66 convert data received from various components into data that may be transmitted via the power lines 58. In certain embodiments, the data received from various components may be digital data. As such, prior to transmitting the digital data via the power lines 58, the communication system 64, for example, may convert the digital data to analog data using a digital-to-analog converter. The resulting analog data may then be transmitted to the power lines 58 and may be received by another communication system (e.g. communication system 62). Although the communication systems 62, 64, 66 are described with reference to FIG. 3 as communicating between each other in a certain manner, it should be noted that each of the communication systems 62, 64, 66 may perform similar functions as described herein.

Upon receiving the analog data, the communication system 62 may convert the analog data into digital data using an analog-to-digital converter. The communication system 62 may also convert the digital data into data that may be interpretable by web devices or the cloud-based computing system 68 before transmitting the data to a network. In certain embodiments, the welding system 52 may receive data from the other welding systems 54, 56 via the AC power lines 58. After receiving the data, the communication system 62 of the welding system 52 may transmit the received data to the cloud-based computing system 68.

In addition to converting data to analog or digital formats, the communication systems 62, 64, 66 may modulate and/or demodulate the received data, such that the data may be communicated via the power lines 58. In certain embodiments, the communication system 62, for example, may modulate or encode the data being transmitted using a Orthogonal Frequency Division Multiplex (OFDM) scheme or a Code division multiple access (CDMA) scheme along with a multiplicity of symbol encoding schemes such as Differential Bi-Phase (DBPSK), Coherent Bi-Phase (BPSK), Differential Quadrature Phase (DQPSK), Offset Quadrature Phase (O-QPSK), Differential 8 Phase Shift Keying (D8PSK), 8 Phase Shift Keying (8-PSK), 8 Quadrature Amplitude Modulation (8-QAM), 16-Quadrature Amplitude Keying (16-QAM), any m-ary phase shift key modulation method whether differential or coherent, any m-ary Quadrature Amplitude modulation method, and the like. By using the above-referenced schemes, the communication systems 62, 64, 66 may transmit and receive digital data between various components of various welding systems connected to a common AC power source (e.g., AC power source 30) via AC power lines 58.

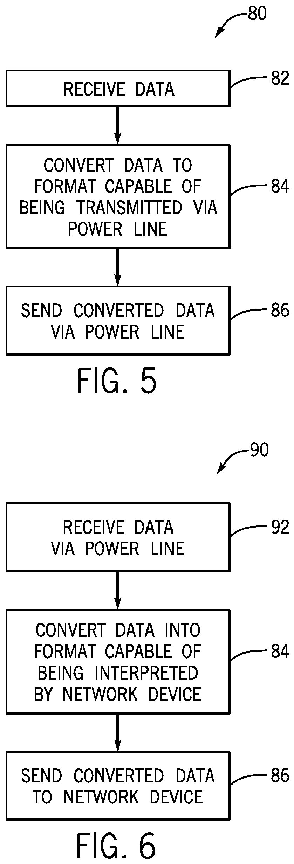

Keeping the foregoing in mind, FIG. 5 illustrates a method 80 that may be employed by the communication system 64 to transmit data via the power lines 58. Although the method 80 is described herein as being performed by the communication system 64, it should be understood that any other communication system 62 or 66 may be capable of performing the same method. At block 82, the communication system 64 may receive data from various welding components in its respective welding power supply unit (e.g., welding power supply unit 54 in this example). The communication system 64 may receive data via any wired or wireless means.

After receiving the data, the communication system 64 may, at block 84, convert the data into a format that may be suited for transmitting over the power lines 58. In certain embodiments, the received data may be in a digital format. As such, the communication system 64 may convert the received data into an analog format as mentioned above. After converting the data into an analog format, the communication system 64 may modulate the analog data such that it may be transmitted over the AC power lines 58. The communication system 64 may modulate the analog data using any of the described modulation schemes discussed above.

At block 86, the communication system 64 may send or transmit the modulated analog data over the AC power lines 58. In certain embodiments, the communication system 64 may transmit the data over the power lines 58 using a transformer coupled to the AC power lines 58. As such, the communication system 64 may transmit the data via the power lines 58 using a current mode coupler (i.e., current transformer coupled to the power lines 58) or a voltage mode coupler (i.e., voltage transformer coupled to the power lines 58). If the AC power source 30 is a multi-phase power source, the communication system 38 may transmit the data to the AC power source 30 via a shunt coupled across two phases of the multi-phase power source or via a shunt coupled across one phase of the multi-phase power source and a neutral or ground connection.

As shown in FIG. 2, in certain embodiments, a limited number of welding systems in the network 50 have a network connection to the cloud-based computing system 68. As such, the communication system 62 aggregates data received from various communication systems (e.g., communication systems 64, 66 in the illustrated embodiment) via the AC power lines 58 and transmit the aggregated data to the cloud-based computing system 68. In this way, although each welding power supply unit 52, 54, 56 may not have a network connection to the cloud-based computing system 68, each welding power supply unit 52, 54, 56 may communicate with the cloud-based computing system 68 via the AC power lines 58 and the communication system (e.g., communication system 62 in the illustrated embodiment) that does have a direct link to the cloud-based computing system 68.

With this in mind, FIG. 6 illustrates a method 90 that the communication system 62 may employ when transmitting data to the cloud-based computing system 68. Again, although the method 90 is described herein as being performed by the communication system 62, it should be understood that any other communication system 64 or 66 may be capable of performing the same method. At block 92, the communication system 62 may receive data via the AC power line 58. Similar to transmitting data via the AC power line 58, the communication system 62 may receive the data via a transformer or the like.

At block 94, the communication system 62 may convert the received data into a format that may be interpretable by a network device, such as the cloud-based computing system 68. As such, the communication system 62 may demodulate the received analog signal and then convert the demodulated analog signal into a digital signal.

At block 96, the communication system 62 may transmit the converted data to the network device via a wired or wireless connection. In certain embodiments, the communication system 62 may include or be communicatively coupled to a modem that may establish a network connection to the network device, such as the cloud-based computing system 68.

By enabling welding systems to communicate data between each other over AC power lines, each welding system may be part of a local network of components. In certain environments where welding systems are typically employed, establishing communication links between various welding systems may be difficult. By creating a local network using AC power lines as described herein, the welding systems are capable of communicating with each other without using additional communication links or wired connections. Moreover, since each of the welding systems may be connected to each other locally, the data of each welding system may be routed to any particular welding system or a particular component in a welding system, which may then transmit the data outside the local network. In this way, data related to various welding systems may be made accessible remotely without providing a network connection to each welding system.

## Claims

1. A welding system (10), comprising:
- a plurality of power cables (58) configured to provide an alternating current (AC) power from a source of power (30) to a plurality of welding power supply units (52, 54, 56);
- a first welding power supply unit (52, 54, 56) of the plurality of welding power supply units (52, 54, 56) configured to receive the AC power via one of the power cables (58), wherein the first welding power supply unit (52, 54, 56) comprises a first communication component (62, 64, 66) configured to couple to the one of the power cables (58), and wherein the first communication component (62, 64, 66) is configured to receive data from welding system components and to convert them to a first set of data that may be transmitted via the one of the power cables (58); and
- a second welding power supply unit (52, 54, 56) configured to receive the AC power via another of the power cables (58), wherein the second welding power supply unit (52, 54, 56) comprises a second communication component (62, 64, 66) configured to couple to the one of the power cables (58), and wherein the second communication component is configured to receive data from welding system components and to convert them to a second set of data that may be transmitted via the one of the power cables (58);
the second communication component (62, 64, 66) is configured to receive the first set of data via the one of the power cables (58), and
that the first communication component (62, 64, 66) is configured to receive the second set of data via the one of the power cables (58) to enable communication between the communication components (62, 64, 66) of the first and second welding power supply unit (52, 54, 56),
**characterized in that**
at least one of the welding power supply units (52, 54, 56) is communicatively coupled to a cloud-based computing system (68) via the communication component (62, 64, 66), and
that the communication component (62, 64, 66) of said at least one welding power supply unit (52, 54, 56) receives and aggregates said converted first and second sets of data via the power cables (58) and transmits them to the cloud-based computing system via a different network connection than the one or more power lines (58).

2. The welding system (10) of claim 1,
comprising a transformer configured to couple to the one of the power cables (58) and one of the communication components (62, 64, 66), wherein the first and/or second set of data is transmitted via the one of the power cables (58) using the transformer.

3. The welding system (10) of claim 2,
wherein the transformer is a current mode transformer or a voltage mode transformer.

4. The welding system (10) of one of the preceding claims,
wherein the second communication component (62, 64, 66) is configured to send the second set of data to the cloud-based computing system (68).

5. The welding system (10) of claim 4,
wherein the second communication component (62, 64, 66) is configured to send the second set of data to the cloud-based computing system (68) via a wired or a wireless communication medium.

6. The welding system (10) of one of the preceding claims,
wherein the source of power (30) comprises a multi-phase source of power.

7. The welding system (10) of one of the preceding claims,
wherein the data received by the communication components (62, 64, 66) comprise digital data.

8. The welding system (10) of claim 7,
wherein the communication components (62, 64, 66) are configured to:
- converting the digital data to analog data; and
- encoding the analog data.

9. The welding system (10) of claim 8,
wherein the analog data is encoded based on an Orthogonal Frequency Division Multiplex (OFDM) scheme, a Code division multiple access (CDMA) scheme, a Differential Bi-Phase (DBPSK) scheme, a Coherent Bi-Phase (BPSK) scheme, a Differential Quadrature Phase (DQPSK) scheme, an Offset Quadrature Phase (O-QPSK) scheme, a Differential 8 Phase Shift Keying (D8PSK) scheme, an 8 Phase Shift Keying (8-PSK) scheme, an 8 Quadrature Amplitude Modulation (8-QAM) scheme, a 16-Quadrature Amplitude Keying (16-QAM) scheme, or any combination thereof.

10. The welding system (10) of one of the preceding claims,
wherein the communication components (62, 64, 66) are configured to convert the data received by the welding system components by:
- demodulating the data to generate a demodulated set of data; and
- converting the demodulated signal into a digital set of data.

11. The welding system (10) of claim 4,
wherein the cloud-based computing system (68) is configured to analyze the second set of data.

## Patentansprüche

1. Schweißsystem (10), aufweisend:
- eine Vielzahl von Stromkabeln (58), die so konfiguriert sind, dass sie Wechselstrom (AC) von einer Stromquelle (30) an eine Vielzahl von Schweißstromversorgungseinheiten (52, 54, 56) bereitstellen;
- eine erste Schweißstromversorgungseinheit (52, 54, 56) der Vielzahl von Schweißstromversorgungseinheiten (52, 54, 56), die so konfiguriert ist, dass sie den Wechselstrom über eines der Stromkabel (58) empfängt, wobei die erste Schweißstromversorgungseinheit (52, 54, 56) eine erste Kommunikationskomponente (62, 64, 66) aufweist, die so konfiguriert ist, dass sie mit dem einen der Stromkabel (58) gekoppelt wird, und wobei die erste Kommunikationskomponente (62, 64, 66) so konfiguriert ist, dass sie Daten von Schweißsystemkomponenten empfängt und sie in einen ersten Satz von Daten umwandelt, die über das eine der Stromkabel (58) übertragen werden können; und
- eine zweite Schweißstromversorgungseinheit (52, 54, 56), die so konfiguriert ist, dass sie den Wechselstrom über ein anderes der Stromkabel (58) empfängt, wobei die zweite Schweißstromversorgungseinheit (52, 54, 56) eine zweite Kommunikationskomponente (62, 64, 66) aufweist, die so konfiguriert ist, dass sie mit dem einen der Stromkabel (58) gekoppelt wird, und wobei die zweite Kommunikationskomponente so konfiguriert ist, dass sie Daten von Schweißsystemkomponenten empfängt und sie in einen zweiten Satz von Daten umwandelt, die über das eine der Stromkabel (58) übertragen werden können;
wobei die zweite Kommunikationskomponente (62, 64, 66) so konfiguriert ist, dass sie den ersten Satz von Daten über das eine der Stromkabel (58) empfängt, und
wobei die erste Kommunikationskomponente (62, 64, 66) so konfiguriert ist, dass sie den zweiten Satz von Daten über das eine der Stromkabel (58) empfängt, um die Kommunikation zwischen den Kommunikationskomponenten (62, 64, 66) der ersten und zweiten Schweißstromversorgungseinheit (52, 54, 56) zu ermöglichen,
**dadurch gekennzeichnet, dass**
zumindest eine der Schweißstromversorgungseinheiten (52, 54, 56) kommunikativ mit einem cloudbasierten Computersystem (68) über die Kommunikationskomponente (62, 64, 66) gekoppelt ist, und
dass die Kommunikationskomponente (62, 64, 66) der zumindest einen Schweißstromversorgungseinheit (52, 54, 56) die umgewandelten ersten und zweiten Sätze von Daten über die Stromkabel (58) empfängt und aggregiert und sie über eine andere Netzwerkverbindung als die eine oder die mehreren Stromleitungen (58) an das cloudbasierte Computersystem überträgt.

2. Schweißsystem (10) nach Anspruch 1,
aufweisend einen Transformator, der so konfiguriert ist, dass er mit dem einen der Stromkabel (58) und einer der Kommunikationskomponenten (62, 64, 66) gekoppelt wird, wobei der erste und/oder zweite Satz von Daten über das eine der Stromkabel (58) unter Verwendung des Transformators übertragen wird.

3. Schweißsystem (10) nach Anspruch 2,
wobei der Transformator ein Strommodustransformator oder ein Spannungsmodustransformator ist.

4. Schweißsystem (10) nach einem der vorhergehenden Ansprüche,
wobei die zweite Kommunikationskomponente (62, 64, 66) so konfiguriert ist, dass sie den zweiten Satz von Daten an das cloudbasierte Computersystem (68) sendet.

5. Schweißsystem (10) nach Anspruch 4,
wobei die zweite Kommunikationskomponente (62, 64, 66) so konfiguriert ist, dass sie den zweiten Satz von Daten über ein drahtgebundenes oder ein drahtloses Kommunikationsmedium an das cloudbasierte Computersystem (68) sendet.

6. Schweißsystem (10) nach einem der vorhergehenden Ansprüche,
wobei die Stromquelle (30) eine Mehrphasen-Stromquelle aufweist.

7. Schweißsystem (10) nach einem der vorhergehenden Ansprüche,
wobei die von den Kommunikationskomponenten (62, 64, 66) empfangenen Daten digitale Daten aufweisen.

8. Schweißsystem (10) nach Anspruch 7,
wobei die Kommunikationskomponenten (62, 64, 66) so konfiguriert sind, dass sie
- die digitalen Daten in analoge Daten umwandeln; und
- die analogen Daten kodieren.

9. Schweißsystem (10) nach Anspruch 8,
wobei die analogen Daten basierend auf einem Orthogonal-Frequency-Division-Multiplex(OFDM)-Schema, einem Code-Division-Multiple-Access(CDMA)-Schema, einem Differential-Bi-Phase(DBPSK)-Schema, einem Coherent-Bi-Phase(BPSK)-Schema, einem Differential-Quadrature-Phase(DQPSK)-Schema, einem Offset-Quadrature-Phase(O-QPSK)-Schema, einem Differential-8-Phase-Shift-Keying(D8PSK)-Schema, einem 8-Phase-Shift-Keying(8-PSK)-Schema, einem 8-Quadrature-Amplitude-Modulation(8-QAM)-Schema, einem 16-Quadrature-Amplitude-Keying(16-QAM)-Schema oder irgendeiner Kombination davon kodiert sind.

10. Schweißsystem (10) nach einem der vorhergehenden Ansprüche,
wobei die Kommunikationskomponenten (62, 64, 66) so konfiguriert sind, dass sie die von den Schweißsystemkomponenten empfangenen Daten umwandeln durch:
- Demodulieren der Daten, um einen demodulierten Satz von Daten zu erzeugen;
- und Umwandeln des demodulierten Signals in einen digitalen Satz von Daten.

11. Schweißsystem (10) nach Anspruch 4,
wobei das cloudbasierte Computersystem (68) so konfiguriert ist, dass es den zweiten Satz von Daten analysiert.

## Revendications

1. Système de soudage (10) comprenant :
- une pluralité de câbles d'alimentation (58) configurés pour fournir une alimentation en courant alternatif (CA) à partir d'une source d'alimentation (30) à une pluralité de blocs d'alimentation de soudage (52, 54, 56) ;
- un premier bloc d'alimentation de soudage (52, 54, 56) parmi la pluralité de blocs d'alimentation de soudage (52, 54, 56) configuré pour recevoir le courant alternatif via l'un parmi les câbles d'alimentation (58), dans lequel le premier bloc d'alimentation de soudage (52, 54, 56) comporte un premier élément de communication (62, 64, 66) configuré pour être couplé à l'un des câbles d'alimentation (58), et dans lequel le premier élément de communication (62, 64, 66) est configuré pour recevoir des données à partir des éléments du système de soudage et pour les convertir en un premier ensemble de données qui peuvent être transmises via l'un parmi les câbles d'alimentation (58) ; et
- un deuxième bloc d'alimentation de soudage (52, 54, 56) configuré pour recevoir le courant alternatif via un autre parmi les câbles d'alimentation (58), dans lequel le deuxième bloc d'alimentation de soudage (52, 54, 56) comporte un deuxième élément de communication (62, 64, 66) configuré pour être couplé à l'un des câbles d'alimentation (58), et dans lequel le deuxième élément de communication est configuré pour recevoir des données à partir des éléments du système de soudage et pour les convertir en un deuxième ensemble de données qui peuvent être transmises via l'un parmi les câbles d'alimentation (58) ;
le deuxième élément de communication (62, 64, 66) est configuré pour recevoir le premier ensemble de données via l'un parmi les câbles d'alimentation (58), et que le premier élément de communication (62, 64, 66) soit configuré pour recevoir le deuxième ensemble de données via l'un parmi les câbles d'alimentation (58) pour permettre une communication entre les éléments de communication (62, 64, 66) des premier et deuxième blocs d'alimentation de soudage (52, 54, 56), **caractérisé en ce que**
au moins un parmi les blocs d'alimentation de soudage (52, 54, 56) est couplé de manière communicative à un système informatique infonuagique (68) via l'élément de communication (62, 64, 66), et
que l'élément de communication (62, 64, 66) dudit au moins un bloc d'alimentation de soudage (52, 54, 56) reçoit et regroupe lesdits premier et deuxième ensembles de données convertis via les câbles d'alimentation (58) et les transmet au système informatique infonuagique via une connexion réseau différente de la ou des lignes d'alimentation (58).

2. Système de soudage (10) selon la revendication 1, comportant un transformateur configuré pour se coupler à l'un parmi les câbles d'alimentation (58) et à l'un parmi les éléments de communication (62, 64, 66), dans lequel le premier et/ou le deuxième ensemble de données est transmis via l'un des câbles d'alimentation (58) à l'aide du transformateur.

3. Système de soudage (10) selon la revendication 2, dans lequel le transformateur est un transformateur en mode courant ou un transformateur en mode tension.

4. Système de soudage (10) selon l'une quelconque des revendications précédentes,
dans lequel le deuxième élément de communication (62, 64, 66) est configuré pour envoyer le deuxième ensemble de données au système informatique infonuagique (68).

5. Système de soudage (10) selon la revendication 4,
dans lequel le deuxième élément de communication (62, 64, 66) est configuré pour envoyer le deuxième ensemble de données au système informatique infonuagique (68) via un support de communication câblé ou sans fil.

6. Système de soudage (10) selon l'une quelconque des revendications précédentes,
dans lequel la source d'alimentation (30) comporte une source d'alimentation multiphase.

7. Système de soudage (10) selon l'une quelconque des revendications précédentes,
dans lequel les données reçues par les éléments de communication (62, 64, 66) comportent des données numériques.

8. Système de soudage (10) selon la revendication 7,
dans lequel les éléments de communication (62, 64, 66) sont configurés pour :
- la conversion des données numériques en données analogiques ; et
- le codage des données analogiques.

9. Système de soudage (10) selon la revendication 8,
dans lequel les données analogiques sont codées sur base d'un schéma de multiplexage par répartition orthogonale de la fréquence (MRO), un schéma d'accès multiple par répartition en code (AMRC), un schéma de phase binaire différentielle (DBPSK), un schéma de phase binaire cohérente (BPSK), un schéma de modulation par déplacement de phase à quatre états avec détection différentielle (MDPQD), un schéma de modulation par déplacement de phase en quadrature décalée (O-QPSK), un schéma de modulation par déplacement de phase à 8 différentiels (D8PSK), un schéma de modulation par déplacement de 8 phases (8-PSK), un schéma de modulation d'amplitude en quadrature 8 (8-QAM), un schéma de modulation d'amplitude en quadrature 16 (16-QAM), ou toute combinaison de ceux-ci.

10. Système de soudage (10) selon l'une quelconque des revendications précédentes,
dans lequel les éléments de communication (62, 64, 66) sont configurés pour convertir les données reçues par les éléments du système de soudage par :
- la démodulation des données pour générer un ensemble démodulé de données ;
- et la conversion du signal démodulé en un ensemble numérique de données.

11. Système de soudage (10) selon la revendication 4,
dans lequel le système informatique infonuagique (68) est configuré pour analyser le deuxième ensemble de données.
